# EUROPEAN PATENT APPLICATION

(11) **EP 4 730 710 A1**
(43) Date of publication of application: **22.04.2026**
(21) Application number: 25209232.5
(22) Date of filing: 16.10.2025
(51) Int. Cl.: H04L 9/40, G06N 20/00

(54) **SYSTEMS AND METHODS FOR RAPID RESPONSE AND REMEDIATION OF DATA PROLIFERATION**

(30) Priority: 18.10.2024 US 202418920250
(71) Applicant: Capital One Services, LLC, McLean, Virginia 22102 (US)
(72) Inventor: SHANKARNARAYANA, Narahari Shettyhalli, McLean, 22102 (US); TRIPATHI, Om Prakash, McLean, 22102 (US)
(74) Representative: Boult Wade Tennant LLP

(57) **Abstract**

Systems and methods are disclosed for responding to a data incident. One or more processors receive one or more indicators of a data leak occurring at one or more nodes of a network. One or more processors causes an identification, by a machine-learning model, of one or more compromised nodes within the network based on the one or more indicators of a data leak. One or more processors may receive from the machine-learning model the identification of the one or more compromised nodes. One or more processors modify access permissions at one or more identified compromised nodes based on a user permission schema or pre-determined access rules, in response to the data leak. One or more processors cause a generation of a notification regarding the data leak and the modifications of access permissions to one or more users associated with the network.

## Description

### TECHNICAL FIELD

Various embodiments of this disclosure relate generally to techniques for data environment response and remediation, and, more particularly, to systems and methods for preventing the unauthorized access and proliferation of sensitive information through logs and other data sources.

### BACKGROUND

In the realm of application monitoring, the practice of ingesting application logs into log servers via forwarding agents is well-established. These logs commonly serve as the foundation for creating visualizations and dashboards, as well as setting up alerts to ensure effective application monitoring. This process is generally intended to maintain the operational integrity and performance of applications by providing real-time insights into their behavior. Additionally, applications often stream data, such as capturing API request and response details, which are then processed downstream through various operations including extraction and transformation. This streamed data may be utilized for business analytics and operational decision-making. Moreover, the collection of cyber logs as part of Security Information and Event Management (SIEM) systems is a common practice for enhancing application security. Log aggregation typically occurs within enterprise log management software or application-owned object storage solutions to facilitate comprehensive log analysis and storage.

For applications deployed in Cardholder Data Environments (CDE), review processes for application development, artifact creation, and release management are often mandatory. Practices such as masking sensitive information within logs and employing tokenization for streaming data are implemented to safeguard sensitive data. Compliance with regulatory standards, including adherence to CDE and Payment Card Industry (PCI) compliance requirements, is generally maintained by dedicated regulatory compliance teams to ensure the security and privacy of transactional data. Despite these measures, there remains a risk of sensitive data being inadvertently logged through application and audit logs, leading to potential data leaks.

This disclosure is directed to addressing the above-mentioned challenges. The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY

Various aspects and embodiments of the invention are set out in the appended claims.

The present disclosure addresses the technical problem(s) described above or elsewhere in the present disclosure and improves the state of data incident response techniques.

In some aspects, the techniques described herein relate to a computer-implemented method for responsive access control modification in an enterprise network, the method including: receiving, by one or more processors, one or more indicators of a data leak occurring at one or more nodes of a network; causing, by the one or more processors and via a machine-learning model, an identification of one or more compromised nodes within the network based on the one or more indicators of a data leak, wherein the machine-learning model has been trained on an architecture, layout, or topology of the network and on one or more network data flow; receiving from the machine-learning model, by the one or more processors, the identification of the one or more compromised nodes; modifying, by the one or more processors, access permissions at the one or more identified compromised nodes based on a user permission schema or pre-determined access rules, in response to the data leak; and causing, by the one or more processors, a generation of a notification regarding the data leak and the modifications of access permissions to one or more users associated with the network.

In some aspects, the techniques described herein relate to a computer implemented method for automatic remediation of network nodes in an enterprise network in response to a data leak, the method including: receiving, by one or more processors, one or more indicators of a data leak occurring at one or more nodes of the network; causing, by the one or more processors and via a machine-learning model, an identification of one or more compromised nodes within the network based on the one or more indicators of a data leak, wherein the machine-learning model has been trained on an architecture, layout, or topology of the network and on network data flow; receiving from the machine-learning model, by the one or more processors, the identification of one or more compromised nodes; initiating, by the one or more processors, a remedial action, the remedial action including an automatic rollback of the one or more compromised nodes to a previous state unaffected by the data leak; and causing, by the one or more processors, a generation of a notification regarding the data leak and the remedial actions undertaken, including details of the rollbacks performed, to one or more users associated with the network.

In some aspects, the techniques described herein relate to a method for managing network security in an enterprise network, implemented by one or more processors, including: detecting, by the one or more processors, a data leak at one or more nodes of the network; identifying, by the one or more processors using a machine-learning model, one or more compromised nodes affected by the data leak, wherein the model is trained on a structure of the network and one or more data flow of the network; modifying, by the one or more processors, access permissions at the one or more compromised nodes based on an output of the machine-learning model, current user permissions, or predefined rules; performing, by the one or more processors, a remedial action to the one or more compromised nodes; and generating, by the one or more processors, a notification about the data leak, one or more modifications to access permissions, and the remedial actions, for one or more network users.

It is to be understood that both the foregoing general description and the following detailed description are example and explanatory only and are not restrictive of the detailed embodiments, as claimed.

### BRIEF DESCRIPTION OF THE DRAWINGS

The accompanying drawings, which are incorporated in and constitute a part of this specification, illustrate various example embodiments and together with the description, serve to explain the principles of the disclosed embodiments.
FIG. 1A is a diagram showing an example of a system environment, according to some embodiments of the disclosure.
FIG. 1B is a diagram of example components of a knowledge graph platform, according to some embodiments of the disclosure.
FIG. 1C is a diagram of example components of a knowledge graph module, according to some embodiments of the disclosure.
Fig. 1D is a diagram of example components of a node, according to some embodiments of the disclosure
FIG. 2 is a flowchart showing a method for predicting unnecessary resource utilization, according to some embodiments of the disclosure.
FIG. 3 shows an example machine-learning training flow chart, according to some embodiments of the disclosure.
FIG. 4 illustrates an implementation of a computer system that executes techniques presented herein, according to some embodiments of the disclosure.

### DETAILED DESCRIPTION

In some embodiments, the present disclosure pertains to the realms of network security and machine learning within data environments. This disclosure covers systems and methods for identifying and mitigating data leaks across networked systems. Specifically, this disclosure introduces frameworks and methodologies for modeling potential data leak scenarios, and implementing preemptive and reactive measures to optimize the security and efficiency of data flow and access within such environments.

In some embodiments, the present disclosure addresses the limitations inherent in current approaches to managing data leaks within networked environments, specifically within card data environments (CDEs). Traditional methods often fall short in effectively identifying and preemptively and automatically reactively mitigating instances of unauthorized data access or exposure. These conventional practices lack in offering tailored management of network nodes, enhancing communication protocols, ensuring strict compliance with security standards, and utilizing advanced predictive analytics to accurately discern the nuances of data leak risks.

To overcome these challenges, a centralized framework and methodology are introduced for comprehensive monitoring, analysis, and implementation of measures aimed at mitigating exposure of internal data leaks. In an example, such a framework consolidates multiple data sources, amalgamating various attributes, events, and incident indicators of network nodes. By harnessing sophisticated analytical techniques, including machine learning algorithms, embodiments of such a framework excel at detecting patterns and associations indicative of suboptimal and/or unauthorized data usage or exposure risks within the network. Furthermore, these analytical processes not only yield insights but also actionable directives to enhance data security, thereby diminishing the likelihood of data leaks and bolstering node security.

Moreover, the solutions outlined herein may leverage data unique to individual nodes and propose node-specific interventions within the context of an entire data environment. The framework and methodology, in embodiments, also entail continuous monitoring of node data and temporal variations in such data, with subsequent adjustments, updates, and model retraining to accommodate shifts and/or changes in node behavior. This may result in greater efficacy in intervention strategies, enhanced security protocols for nodes, and a reduction in the complexity of managing network security. The technical advancements and additional enhancements facilitated by this disclosure are elucidated in detail throughout the document. It should be clear to those skilled in the art that the technical improvements provided herein extend beyond those explicitly mentioned, encompassing further advancements in the field of network security and data leak prevention.

In some embodiments, a computer-implemented method for responsive access control modification in an enterprise network is disclosed. This method encompasses several steps carried out by one or more processors. Initially, the processors receive indicators that a data leak is occurring at various nodes within the network. Leveraging a machine-learning model trained on the network's layout and data flow, the processors then identify which additional nodes are likely compromised based on these indicators. Once these compromised nodes are identified by the machine-learning model, the processors receive this information. Following the identification, the method entails the modification of access permissions at these compromised nodes. This modification is done according to predefined user permissions or access rules to respond swiftly to the data leak and minimize the proliferation of compromised data. The method also includes generating and sending notifications about the data leak and the changes in access permissions to one or more users connected with the network, thereby keeping the one or more users informed about the security status.

While principles of the present disclosure are described herein with reference to illustrative embodiments for particular applications, it should be understood that the disclosure is not limited thereto. Those having ordinary skill in the art and access to the teachings provided herein will recognize additional modifications, applications, embodiments, and substitution of equivalents all fall within the scope of the embodiments described herein. Accordingly, the disclosure is not to be considered as limited by the foregoing description.

Various non-limiting embodiments of the present disclosure will now be described to provide an overall understanding of the principles of the structure, function, and use of systems and methods disclosed herein for data environment management.

Reference to any particular activity is provided in this disclosure only for convenience and not intended to limit the disclosure. A person of ordinary skill in the art would recognize that the concepts underlying the disclosed devices and methods may be utilized in any suitable activity. For example, while the present disclosure is in the context of CDEs, one of ordinary skill would understand the applicability of the described systems and methods to similar tasks in a variety of contexts or environments. The disclosure may be understood with reference to the following description and the appended drawings, wherein like elements are referred to with the same reference numerals.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. The term "or" is used disjunctively, such that "at least one of A or B" includes, (A), (B), (A and A), (A and B), etc. Relative terms, such as, "substantially" and "generally," are used to indicate a possible variation of ±10% of a stated or understood value.

It will also be understood that, although the terms first, second, third, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

As used herein, a "machine-learning model" generally encompasses instructions, data, and/or a model configured to receive input, and apply one or more of a weight, bias, classification, or analysis on the input to generate an output. The output may include, for example, a classification of the input, an analysis based on the input, a design, process, prediction, or recommendation associated with the input, or any other suitable type of output. A machine-learning model is generally trained using training data, e.g., experiential data and/or samples of input data, which are fed into the model in order to establish, tune, or modify one or more aspects of the model, e.g., the weights, biases, criteria for forming classifications or clusters, or the like. Aspects of a machine-learning model may operate on an input linearly, in parallel, via a network (e.g., a neural network), or via any suitable configuration.

Training the machine-learning model may include one or more machine-learning techniques, such as linear regression, logistical regression, random forest, gradient boosted machine (GBM), deep learning, and/or a deep neural network. Supervised and/or unsupervised training may be employed. For example, supervised learning may include providing training data and labels corresponding to the training data, e.g., as ground truth. Unsupervised approaches may include clustering, classification or the like. K-Prototypes or K-Means may also be used, which may be supervised or unsupervised. Combinations of K-Nearest Neighbors and an unsupervised cluster technique may also be used. Any suitable type of training may be used, e.g., stochastic, gradient boosted, random seeded, recursive, epoch or batch-based, etc. After training the machine-learning mode, the machine-learning model may be deployed in a computer application for use on new input data that it has not been trained on previously.

As used herein, a "Card Data Environment" (CDE) generally encompasses a wide array of network configurations and systems dedicated to processing, storing, or transmitting cardholder information. This includes, but is not limited to, physical and virtual servers, payment terminals, point-of-sale (POS) systems, online transaction platforms, and any other entities involved in the handling of sensitive payment card data. Furthermore, the CDE extends to encompass network components and software applications directly connected to or supporting these data processing activities, including security solutions, monitoring tools, data storage repositories, and communication channels.

As used herein, "sensitive data" and/or "sensitive information" generally encompasses data which may be considered sensitive to one or more users or parties within the CDE. This includes, but is not limited to, data related to pan number, pan expiry date, pan-CVV and also virtual card number, virtual card expiration date and virtual card number CVV, tax-id, and social security numbers.

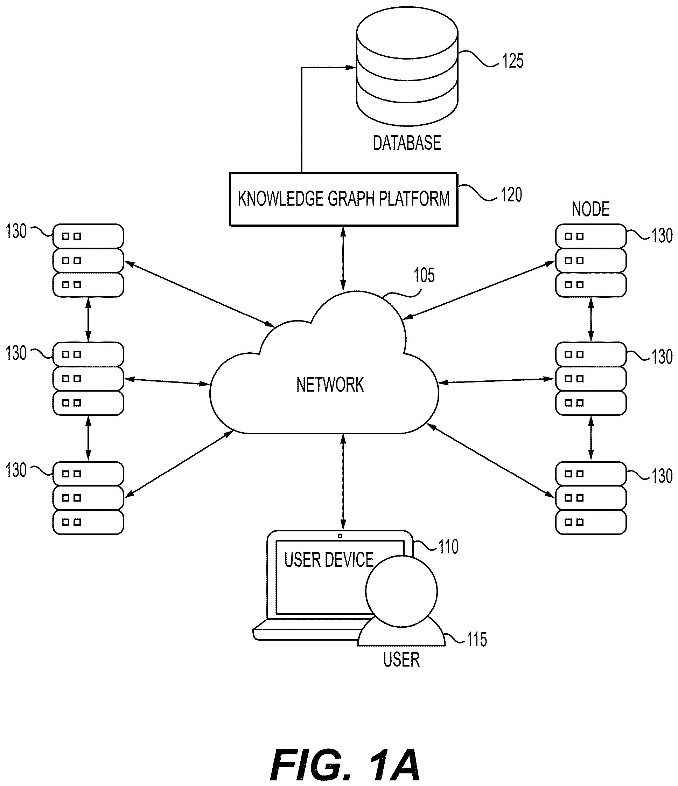

FIG. 1A illustrates a diagram of a system designed for managing CDEs, as per some embodiments of the disclosure. The depicted environment, labeled as environment 100, is presented in line with a particular embodiment of this disclosure. Environment 100 includes a communication infrastructure known as network 105, which is connected to user device 110, and further integrates with a knowledge graph platform 120 that incorporates a database 125.

In one embodiment, various components within environment 100 interact via network 105. Network 105 enables communication between knowledge graph platform 120 and other systems, including nodes such as node 130. Node 130 and user device 110 may contain data, data entries, and/or data objects relevant to transactional or operational activities within the CDE. Network 105 may comprise various types of networks, including but not limited to data networks, wireless networks, telephony networks, or any combination thereof, facilitating robust and secure data flow across environment 100. Within environment 100, any of these components, including user device 110, knowledge graph platform 120, and nodes 130, may communicate with one another based on established access permissions, which may be dictated by one or more access permissions associated with user 115.

Any of the user device 110, nodes 130, or the database 125 associated with the knowledge graph platform 120 may contain a diverse collection of structured and/or unstructured data pertinent to transactions and operational processes within the CDE. In some embodiments, this data, organized into one or more data objects, spans a variety of dimensions including transaction records, customer interaction logs, API request and response data, security and compliance documentation, along with insights from data analytics. This extensive repository, which includes transaction histories, user activities, security incidents, and compliance statuses, may be housed in storage solutions that may range from local to cloud-based data storage systems, ensuring secure storage and accessibility for ongoing processing and analytical evaluation.

The database 125 may support the storage and retrieval of data related to one or more data sets and/or data objects, such as transaction records, customer interaction logs, and API request and response data, storing metadata and operational data about one or more entities represented in these data sets, as well as any information received from the knowledge graph platform 120. Database 125 may comprise one or more systems, including but not limited to a relational database management system (RDBMS), a NoSQL database, or a graph database, tailored to meet the specific needs and use cases within environment 100.

In one embodiment, database 125 may be any type of database system, such as relational, hierarchical, object-oriented, etc., where data is systematically organized in tables, lookup tables, or other appropriate structures. Database 125 may be configured to store and facilitate access to data utilized by knowledge graph platform 120, encompassing information related to transaction and operational logs as well as outputs generated by the platform. Database 125 may be configured to store a wide variety of information, e.g., to assist in the management and security of the CDE.

In one embodiment, database 125 includes a machine learning-based training database that delineates relationships, associations, and connections between input parameters from the transaction and operational data and output parameters representing various metrics for environment management. For instance, the training database might incorporate machine learning algorithms designed to learn mappings between data inputs and outputs such as transaction anomalies, security threat indicators, compliance metrics, access protocols and permissions, data flow, and the like. This training database may be periodically updated to reflect additional insights gained through ongoing machine learning processes.

Knowledge graph platform 120 communicates with other components within network 105 using established or emerging protocols. These protocols facilitate interactions between nodes 130 and define the conventions for creating, sending, and interpreting data exchanged across communication links. They function across different layers, ranging from the generation of physical signals to the recognition of specific software applications engaged in data transmission or reception.

Communications between the various components of the networks are typically affected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers.

In operation, environment 100 serves as a platform for processing and analyzing transaction data within a CDE, utilizing techniques such as data analytics, artificial intelligence, and database management. For instance, in an embodiment, environment 100 facilitates the generation of insights, metrics, and data objects from various datasets, including transactional and card data, according to predefined criteria or multiple parameters.

To execute these functions, the knowledge graph platform 120 may employ one or more techniques, such as utilization of the machine-learning model 127b, which is configured to interpret card data to identify patterns, trends, and/or anomalies within the environment 100. Additionally, the knowledge graph platform 120 is configured to leverage the data collection module 122 and the data processing module 124 to aggregate and refine card transaction data for further analysis.

For efficient data storage and access, for example, the database 125 may archive metadata associated with the transaction data, including information about data origins, types, and structures. This database 125 may also retain details on the insights generated by the knowledge graph platform 120, such as transaction patterns, identifiers, and statistical data.

Beyond transaction analysis, environment 100 supports a range of applications, including data visualization, search functionalities, and predictive modeling. For example, environment 100 may enable users on user devices 110 to query transaction data for specific metrics that meet certain criteria, or to visualize transactional statistics through dynamic graphs and charts.

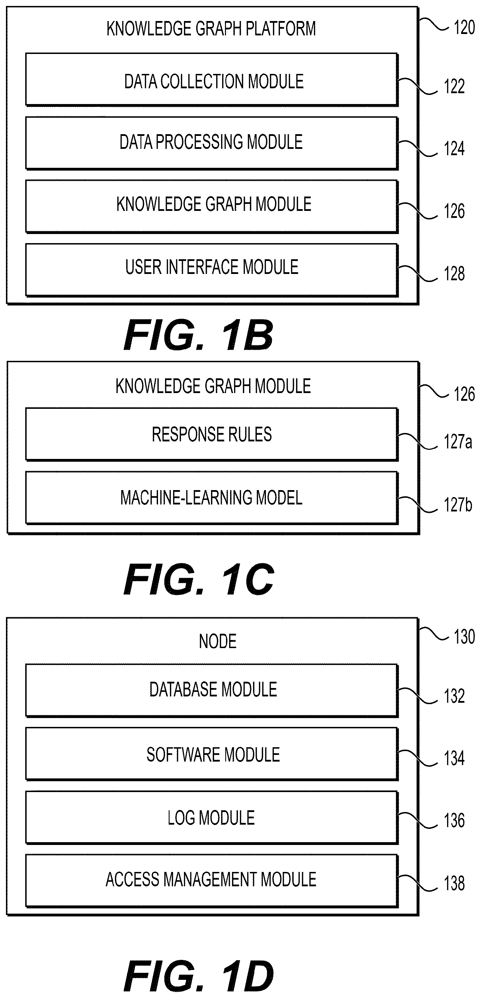

Fig. 1B is a diagram illustrating example components of the knowledge graph platform 120, according to some embodiments. This figure shows that the knowledge graph platform 120, as part of environment 100, has the functionality to analyze various datasets, such as transaction data, and generate data objects, including insights and metrics relevant to the CDE. The terms "component" or "module" within this context refer to both hardware and software implemented by a processor or similar technology. Specifically, the knowledge graph platform 120 is equipped with modules for collecting, processing, analyzing transaction data, and generating data objects. These include the data collection module 122, the data processing module 124, the knowledge graph module 126, and the user interface module 128. The design allows for flexibility in how these modules are organized, with the possibility of integrating their functions into fewer modules or distributing them across different modules with similar capabilities.

In certain embodiments, the data collection module 122 of the knowledge graph platform 120 is configured to gather and/or receive data from various sources and formats during the operation of environment 100. This module is configured to receive a wide range of data types, including, but not limited to, transaction records, user interaction data, policy data, fraud detection data, and analytics data. Additionally, the data collection module 122 is configured to process proprietary or generated data like transaction analytics, risk assessments, and predictive modeling outputs.

In some embodiments, the knowledge graph platform 120 may monitor the flow of data between components and nodes within the environment 100, e.g., to assist in the creation of a conceptual mapping that outlines the relationships between nodes 130. This monitoring process is configured to help in understanding how data is transferred and managed across the system, potentially identifying areas for improvement in data flow and security and guiding remedial actions in response to internal data leaks. Additionally, the knowledge graph platform 120 may observe, analyze, and/or receive access control rules associated with both nodes 130 and users 115 of the environment. Through this observation, the knowledge graph platform 120 is configured to build a conceptual map of the rules governing access based on certain configurations and states of nodes 130. This capability allows for a more nuanced understanding of how access controls are implemented and managed, and enables adjustment of access control rules in rapid response to an identified internal data leak, contributing to the overall security and efficiency of the environment 100.

The data may be ingested into the knowledge graph platform 120 via multiple pathways, thereby providing flexibility in the collection mechanism. Specifically, one pathway includes an Application Programming Interface (API) that establishes a secure communication channel for automated data transfer between the data collection module 122 and external data sources, thus facilitating real-time or batch-based data acquisition. Another pathway allows for manual input by authorized users via a dedicated user interface, where such input can be executed through file uploads or direct data entry into predefined fields. Additionally, data intake can be accomplished through third-party integrations, middleware, or direct database queries that serve to populate the database 125. The data collection module 122 further incorporates data validation and integrity checks to ensure the consistency and reliability of the ingested data. By offering a plurality of data intake methodologies, the data collection module 122 ensures robust and comprehensive data assimilation for downstream processing.

In some embodiments, the data processing module 124 of the knowledge graph platform 120 is involved in processing and preparing the data for further analysis by the knowledge graph module 126. The data processing module 124 undertakes the cleaning of data, elimination of irrelevant or redundant information, and/or conversion of the data into a format suitable for analysis by the knowledge graph module 126. The data processing module 124 is configured to enhance the initial data collection by transforming the raw, diverse data into a unified, standardized format for accurate and efficient analysis downstream. Specifically, the data processing module 124 may employ a series of algorithms for data standardization, addressing inconsistencies in data types, units, or terminologies from various sources.

The data processing module 124 may be configured to further apply one or more error-handling mechanisms to detect and correct possible data inaccuracies or anomalies. These mechanisms can include rule-based checks, probabilistic data matching, or data imputation techniques, all aimed at maintaining data quality and integrity. Additionally, the data processing module 124 may feature parallel processing capabilities to manage multiple data streams simultaneously, enhancing the timeliness and efficiency of data throughput. This attribute is especially beneficial for handling large datasets or facilitating real-time analytics, where rapid data processing is critical.

Upon receiving the processed data from the data processing module 124, the knowledge graph module 126 may apply algorithms and models to generate one or more data objects, including insights and metrics relevant to the CDE. The knowledge graph module 126 may utilize a variety of algorithms and machine-learning models to achieve this, engaging in the computational analysis of the ingested data. Utilizing machine-learning model 127b as part of its analytical framework, the knowledge graph module 126 may employ a mix of algorithmic and machine-learning methodologies to produce metrics and data objects based on the input data. These metrics and data objects provide quantifiable insights and data structures into the dynamics and patterns within the CDE.

The knowledge graph module 126 may also generate metrics that represent aggregated user activities or recommendations for enhancing data security and operational efficiency. These metrics may be formulated through a combination of rule-based algorithms and probabilistic models, which evaluate and incorporate variables like transaction volumes, access patterns, and security incidents.

After generating the data objects, including insights and metrics, a user interface presented on a user device through the user interface module 128 may be configured to display the results to the user in a timely manner. This interface offers an interactive and intuitive platform for users to view, analyze, or act upon the generated insights. The user interface module 128 may also be configured to receive feedback and/or inputs from one or more uses, and thus may enable users to provide feedback or input additional parameters to refine the analysis or adjust the models within the knowledge graph platform 120 accordingly.

FIG. 1C is a diagram of example components of a knowledge graph module 126, according to some embodiments of the disclosure. FIG. 1C provides a more detailed view of the knowledge graph module 126 and its relationship with the response rules 127a and machine-learning model 127b within the knowledge graph platform 120. The knowledge graph module 126 is designed to orchestrate a sophisticated understanding of data flows and security within the environment 100, facilitating a proactive approach to data incident responses and network management. The knowledge graph module 126 leverages the response rules 127a to define and enforce protocols for data incident management, and the machine-learning model 127b - which in some embodiments is referred to as a "knowledge graph" - which utilizes advanced analytics to predict and prescribe data flow associations, user access permissions, and/or adaptive response strategies based on the current state of network nodes and overall system integrity. This holistic approach enables the knowledge graph platform 120 to dynamically manage access controls and respond to security incidents by adjusting node access policies and configurations, ensuring the CDE remains secure and efficient.

In some embodiments, the knowledge graph module 126 is equipped with one or more response rules 127a. These response rules may serve as predefined protocols or guidelines that dictate how the knowledge graph module 126 should react to various data incidents, such as security breaches or internal data leaks. The formulation of these rules can be based on input from users possessing the requisite permissions or derived from the insights gained through the training of the machine-learning model. One objective of these rules may be to maintain the integrity and security of the environment, e.g., by specifying actions like reverting nodes to their prior, uncompromised states, modifying access permissions, and enforcing node-specific access rules depending on their current state.

The response rules 127a enable the knowledge graph platform 120 to proactively manage and mitigate potential threats to the data environment. The response rules 127a may be configured to be adaptive, allowing for updates and refinements based on evolving security requirements or changes in the network configuration. This flexibility ensures that the knowledge graph platform 120 remains robust against threats by implementing timely and appropriate response mechanisms.

Furthermore, these rules may be configured to facilitate the automation of response actions, streamlining the process of incident management and minimizing the need for manual intervention. By leveraging the capabilities of the machine-learning model within the knowledge graph module 126, the response rules 127a may be dynamically updated to reflect the current understanding of the network's data flow and security landscape, which may enable the knowledge graph platform 120 to update and/or modify one or more modules, rules, or models, such that one or more responses of the knowledge graph platform 120 evolves in tandem with emerging security threats and/or changes to the environment 100.

In some embodiments, the machine-learning model 127b, also known as and/or including the knowledge graph, is accessed by the knowledge graph module 126. This model is tasked with analyzing and understanding the dynamics of data flow within the CDE, encompassing the interactions between nodes 130, the structure of the network 105, and the access permissions granted to one or more users 115 under various scenarios. By processing data pertaining to communications between nodes 130, visual representations of the network's architecture, changes in node configurations over time, and/or other relevant information, the machine-learning model 127b is configured to generate predictions about associations between nodes 130, determines user access permissions based on the state of the nodes 130, and devises response rules 127a for managing data incidents.

To accomplish these tasks, the model 127b is configured to employ advanced machine learning algorithms, e.g., to sift through vast quantities of data, identifying patterns and relationships that may not be immediately apparent. This may enable the knowledge graph platform 120 to offer insights into the operational aspects of the network 105, facilitating more informed decision-making regarding security and data management policies.

The machine-learning model 127b is configured to continuously learn from new data and evolving network conditions, with the knowledge graph platform 120 updating the training of the machine-learning model 127b in response to received data about the network schema and flow of data through the network 105. This updating may result in modifying the machine-learning model 127b such that one or more outputted predictions and recommendations remain relevant and accurate, providing a dynamic tool for the proactive management of the environment 100. The ability of the machine-learning model 127b to anticipate potential security issues in the event of a data incident and suggest preemptive actions contributes to the overall resilience of the CDE.

In some embodiments, the machine-learning model 127b within the knowledge graph module 126 may be characterized as a multi-modal model. In some embodiments, the model may incorporate and process data from diverse formats, including, but not limited to, textual data, numerical data, and image data. Specifically, the machine-learning model 127b may be capable of ingesting network diagrams provided in the form of images, alongside actual data flow information through the system, to enhance its understanding and analysis of the environment 100 and/or network 105.

In some embodiments, the multi-modal configuration of the machine-learning model 127b may utilize and/or leverage the complementary strengths of different data types. For instance, network diagrams as images may offer visual insights into the structural organization and connectivity between nodes within the network, which textual or numerical data alone might not fully convey. By analyzing these diagrams, the machine-learning model 127b may identify patterns, relationships, or anomalies in the network's architecture that support predicting data flow associations and determining optimal response strategies to potential security incidents.

Furthermore, the machine-learning model 127b may employ advanced algorithms capable of processing image data, such as convolutional neural networks (CNNs) or other deep learning techniques, to extract features and learn representations from network diagrams. This capability may be integrated with the analysis of textual and numerical data using techniques suitable for those formats, such as recurrent neural networks (RNNs) for sequential data or graph neural networks (GNNs) for data representing the network's topology. It will be appreciated that many forms of machine-learning models may be utilized, depending on the needs of the particular environment.

The training and continuous updating of the machine-learning model 127b may involve the iterative refinement of its parameters based on feedback from the system's performance and the emergence of new data. This training and/or updating and/or modifying process may include retraining the machine-learning model 127b with updated network diagrams reflecting changes in a structure or configuration of network 105, as well as incorporating fresh data flow information. The dynamic updating mechanism may be configured so that the machine-learning model 127b remains attuned to the evolving state of the environment 100, enabling it to provide relevant and timely insights for managing access controls, responding to security incidents, and ensuring the integrity of the CDE.

In some embodiments, Fig. 1D illustrates a diagram of example components of a node 130 within environment 100, such as a CDE. The node 130 may serve a variety of functions depending on its configuration and role within the network 105. These functions can include, but are not limited to, serving as an access point, server, data silo, application environment, transaction processor, or the like. The node 130 may include several components, such as a database module 132, a software module 134, a log module 136, and an access management module 138, among others. Each of these components may perform distinct functions and operate in conjunction with one another to ensure the node 130 is configured for effective and secure participation within the network 105.

The database module 132 may be configured to store and manage various types of data relevant to one or more functions of the node 130. This may include card data, transaction records, data logs, version histories, backups of one or more states of the node 130, and other pertinent information. The database module 132 may utilize different types of databases, such as relational databases or NoSQL databases, depending on the specific requirements of the node 130. Security features, such as encryption and data masking, may be employed to protect sensitive data, along with data management practices including backup, recovery, and ensuring data integrity.

The software module 134 may encompass the applications and software utilities running on the node 130, configured to support a specific role of the node 130 within the network. The software module 134 may cover a wide range of software solutions, from payment processing applications in transaction processors to data analysis tools in data silos, among others. The development framework for these applications may vary, incorporating various programming languages and development environments. Procedures for applying updates and patches are also included to maintain the software's security and functionality.

The log module 136 may be configured to log activities related to the node 130, such as transactions, access attempts, and system errors. The log module 136 may implement strategies for log storage, rotation, and monitoring to ensure comprehensive oversight of one or more functions and/or operations of node 130. Logs may be managed in compliance with one or more security policies and/or regulatory requirements.

In some embodiments, the access management module 138 may be configured to control access to the node 130, such as by employing mechanisms for authentication and authorization. This may include defining one or more user roles and/or permissions, utilizing security protocols like SSL/TLS and multi-factor authentication, ensuring compliance with audit and security regulations, and the like. The access management module 138 may facilitate the enforcement of access controls, thereby safeguarding the node against unauthorized access and potential security threats.

Furthermore, the node 130 may feature capabilities for integration and communication, both internally among its components and externally with other nodes 130 in the network 105, environment 100, or with external systems and services. The node 130 may be configured to function cohesively within the broader environment 100, supporting the seamless flow of data and the execution of network-wide policies and procedures.

In some embodiments, one or more aspects of node 130 generates one or more data, such as logs, version histories, access records, or the like. Knowledge graph platform 120 (or any other suitable component of environment 100 and/or network 105) may be configured to aggregate the data and generate one or more data objects and/or index where the data and/or logs may be stored. The knowledge graph platform 120, through data processing module 124, may be configured to inventory the datasets, log indexes, storage objects and store these inventoried data objects in database 125. The knowledge graph platform 120 may also be configured to inventory and/or store one or more access control policies and/or rules associated with one or more data objects for both user and application access. The knowledge graph platform 120 may also be configured to inventory the read-write pattern of one or more nodes 130, along with the communications patterns between one or more nodes 130. These data objects generated by the knowledge graph platform 120 may include their own permissive access scheme, such that only authorized parties are permitted access to these data objects.

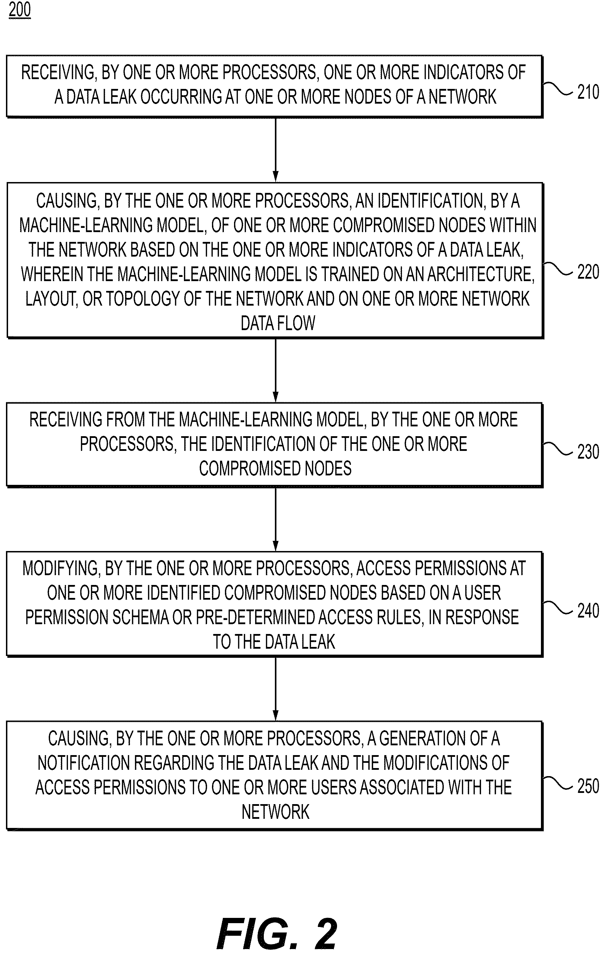

Fig. 2 is a flowchart showing a computer-implemented method for responding to a data incident. At step 210, the method may include receiving, by one or more processors, one or more indicators of data leaks occurring at one or more nodes of a network, such as one or more nodes 130 associated with network 105. In some embodiments, at step 210, one or more processors within a network 105, such as the knowledge graph platform 120, receive indicators of potential data leaks from one or more nodes within the environment 100, or one or more other sources, such as a third party source or through an indication from one or more user. The indicators of a data leak may encompass a variety of signals or data points that suggest unauthorized access, disclosure, or exposure of data. In some embodiments, the indicator is the presence of sensitive user information in one or more logs of one or more nodes 130, e.g., via an algorithm or the like configured to parse log data to identify a keyword, a pattern, a characteristic or parameter of a data object, etc., whereby such elements may be predetermined to be indicative of a data leak.

Typically, sensitive user information is intentionally obfuscated to avoid exposure of sensitive user information, such as card account numbers. In some embodiments, the indicators could include, but are not limited to, unusual network traffic patterns, discrepancies in data logs, alerts generated by data incident detection systems, unexpected changes in file sizes or system configurations, flags from automated crawlers which identify sensitive data in logs, reports of identifiable data from users or automated monitoring systems, or the like. The processors, e.g., through detection algorithms and monitoring protocols, are configured to interpret these indicators and assess their potential implications for data security. In some embodiments, the indicator is the submission of a user-form to the knowledge graph platform 120 by one or more users 115. The user-form may be present on one or more devices , such as user device 110. A user 115 with sufficient access permissions accesses a graphical user interface (GUI) through user interface module 128 and reports details of a data incident to the system. In some embodiments, the user 115 also provides recommended remedial actions to the system, such as modifications to access permissions or rollbacks. The user-form, in some embodiments, may be submitted by the user 115 through a variety of communication pathways to the knowledge graph platform 120. For example, the user may submit the user-form through electronic-mail, along with supporting evidence for the data incident.

Upon receiving one or more indicators, the processors may employ a series of predefined criteria, such as response rules 127a, and/or machine learning models, such as machine-learning model 127b, to validate the authenticity and severity of the data leak. This validation process may involve cross-referencing the indicators with known patterns of data breach incidents, analyzing the context and/or content of the indicators within the network's operational parameters, or applying anomaly detection techniques to distinguish between false alarms and genuine data incidents. For example, the processor may follow one or more rules for identifying specific strings or string patterns within data logs at the nodes 130 which are indicative of sensitive user data.

The reception of indicators by the processor may, in some embodiments, initiate a structured response protocol designed to mitigate the effects of the data incident. This protocol may include, among other steps, the isolation of affected nodes to prevent further unauthorized data access, the initiation of forensic investigations to determine the cause and extent of the leak, the activation of communication channels to notify relevant stakeholders about the incident, and the reversion of one or more aspects of one or more nodes to a prior state, the prior state being an uncompromised state.

At step 220, the method may include causing, by the one or more processors, an identification, by a machine-learning model, one or more compromised nodes within the network based on the one or more indicators of a data leak, wherein the machine-learning model is trained on an architecture, layout, or topology of the network and on one or more network data flow. This training enables the machine-learning model to identify associations between data at a first node, which may be the node indicated to be compromised, and data propagation at one or more second nodes to and/or from the first node.

This training dataset may include layout images of the network, providing a visual representation of the network's structure, as well as data derived from monitoring the flow of data throughout the system. The incorporation of layout images enables the machine-learning model to analyze the physical and logical interconnections between nodes within the network, facilitating a deeper understanding of potential pathways for data flow and, consequently, potential vectors for data leakage.

Furthermore, in some embodiments, the machine-learning model is configured to continuously monitor data flow throughout the network, allowing it to dynamically learn and adapt to changes in the network's operation. This ongoing monitoring process contributes to the machine-learning model's ability to detect anomalies indicative of a data leak by comparing current data flow patterns against a baseline established through its initial training and subsequent learning. The comparison of real-time data flow with historical patterns enables the identification of data propagation patterns throughout the network, thus identifying compromised nodes within the network.

In training the machine-learning model, a variety of data sources and formats are utilized to ensure a comprehensive understanding of the network's dynamics. This may include, but is not limited to, transaction logs, access logs, system configuration data, and user activity data. By analyzing this diverse dataset, the machine-learning model develops an intricate model of how data should flow under normal operating conditions and the data associations between nodes.

The machine-learning model's training also involves sophisticated algorithms capable of processing and interpreting the complex datasets derived from both the layout images and the monitored data flow. These algorithms enable the machine-learning model to discern patterns and relationships within the data, enhancing its ability to detect anomalies and identify compromised nodes with a high degree of accuracy. The selection of algorithms is tailored to the specific characteristics of the network and the types of data leaks most likely to be encountered, ensuring that the machine-learning model is optimally prepared to safeguard the network against unauthorized data access.

Furthermore, the processors, in collaboration with the knowledge graph platform 120, may leverage the received indicators to update the machine-learning model 127b. This update process enables the refinement of the model's predictive capabilities, allowing for more accurate identification of compromised nodes and the formulation of more effective preventive measures against future incidents. The integration of these indicators into the knowledge graph platform 120 can also enhance the platform's overall understanding of the network's vulnerabilities and the typical behaviors associated with data leaks.

Following the example above, after the shipping scheduler is locked down due to the detection of a Social Security number, the machine-learning model-trained on the network's architecture and data flows-identifies not only the initially compromised node (the shipping scheduler) but also any other nodes that may have received or transmitted the sensitive data.

At step 230, the method may include receiving from the machine-learning model, by the one or more processors, the identification of the one or more compromised nodes. The identified compromised nodes may be communicated to the processors via a first connection, which may be internal of the knowledge graph platform 120 or which may be part of environment 100. This connection is configured to facilitate the structured exchange of information between the knowledge graph platform 120 and the processors, such that the identification of compromised nodes is accurately received and logged for subsequent action.

Furthermore, in some embodiments, the reception of the identification of one or more compromised nodes may trigger a series of predefined response protocols within the knowledge graph platform 120. These protocols may include, but are not limited to, alert generation, logging of the identified compromise for audit purposes, initiation of automated or manual response procedures aimed at mitigating the detected security threat, and the like. The processors, upon receiving the identification from the machine-learning model 127b, may be configured to parse the information and distribute it to relevant components within the knowledge graph platform 120. Thus the system may be configured such that appropriate measures are promptly taken to address the compromised nodes 130, safeguarding the integrity of the network and the data it contains.

Following the example above, at step 230, once the machine-learning model has identified the compromised nodes-including the initial shipping scheduler and any second nodes involved-the model communicates this identification to the processors.

In some embodiments, the knowledge graph platform 120 is configured to capture and analyze software release notes and changes in software dependencies associated with one or more nodes 130 within the environment 100. This analysis may be performed to identify potential sources of data leaks or unexpected behaviors that could lead to the exposure of sensitive information. The knowledge graph platform 120 may employ various techniques, such as natural language processing, machine learning, or pattern matching, to extract relevant information from the release notes and dependency changes, and to correlate this information with detected data incidents.

In some embodiments, the knowledge graph platform 120 includes a module or plugin configured to detect changes in logger modules associated with applications running on one or more nodes 130. For example, in a Java/Spring application that utilizes log4j2 as its logger module, the knowledge graph platform 120 may monitor for changes in the software dependencies that could result in another logger module, such as logback, overriding log4j2. Such changes could break the masking logic implemented in log4j2, leading to the exposure of sensitive data in application logs. By detecting these changes, the knowledge graph platform 120 is configured to identify potential sources of data leaks and take appropriate remedial actions.

In some embodiments, the knowledge graph platform 120 is configured to utilize the release notes associated with software updates and changes to gain insights into potential vulnerabilities or data leak risks. These release notes, which are typically human-readable, may be stored in a database or a similar data structure that allows for efficient querying and analysis. The knowledge graph platform 120 may employ LLM-compatible software agents or utilize the knowledge graph itself to draw inferences from the release notes, identifying any changes or updates that could impact the security or integrity of the data processed by the affected software components.

In some embodiments, upon detecting a data leak and identifying the compromised nodes 130, the knowledge graph platform 120 initiates a remedial action that involves rolling back the affected software applications to a previous version that is known to be unaffected by the data leak. This rollback process may be performed in addition to or in conjunction with the modification of access permissions, as described herein. The knowledge graph platform 120 may maintain a version history of the software applications deployed on the nodes 130, allowing it to identify the most recent version that is free from the vulnerabilities or misconfigurations that led to the data leak. By reverting to this previous version, the knowledge graph platform 120 can effectively mitigate the impact of the data leak and prevent further exposure of sensitive information.

In some embodiments, the knowledge graph platform 120 generates a comprehensive report or notification that includes details about the detected data leak, the compromised nodes 130, the specific software components or dependencies involved, and the remedial actions taken. This report may also include information derived from the analysis of software release notes and dependency changes, highlighting any correlations between these factors and the observed data leak. The report may be distributed to relevant stakeholders, such as system administrators, security teams, and application owners, to provide them with a clear understanding of the incident and the steps taken to address it. Additionally, the knowledge graph platform 120 may update its knowledge base and machine learning models based on the insights gained from the incident, enhancing its ability to detect and respond to similar threats in the future.

At step 240, the method may include modifying, by the one or more processors, access permissions at one or more identified compromised nodes based on a user permission schema or pre-determined access rules, in response to the data leak. This modification may be conducted in accordance with a user permission schema or predetermined access rules, such as response rules 127a, acting in direct response to the data leak detected by the knowledge graph platform 120. The process may include a dynamic adjustment of access levels by the knowledge graph platform 120, where permissions at one or more nodes 130 and/or user devices 110 may be restricted or altered to prevent further unauthorized access or to mitigate the potential for data leakage from the compromised nodes. Such modification is configured to contain and/or minimize the impact of the data leak and secure the network 105. The modification of access permissions may be based on a comprehensive subset of the data available to the system, including, but not limited to, the current access control settings, the nature of the compromise (such as the initial compromised node and the machine-learning identified additionally impacted nodes), and the specific requirements of the network's security protocols, which may be, individually or in any ordered combination, used as inputs to a machine-learning model 127b to generate an adjustment recommendation in one or more access protocol at one or more node 130.

Furthermore, the modification process may involve a review and/or an analysis of the user roles and access requirements associated with the compromised nodes 130. The one or more processors, utilizing the information received from the knowledge graph platform 120 regarding the identified compromised nodes 130, may be configured to apply changes to the access permissions in a manner that is both targeted and minimally disruptive to legitimate network operations. This may include temporarily suspending user accounts, reducing or modifying privilege levels for one or more users 115, reverting states of one or nodes 130, or implementing additional authentication steps for users accessing sensitive areas of the network 105.

In some embodiments, the machine-learning model 127b may be further trained not only to identify impacted nodes 130 within the network 105 but also to discern, identify, and/or predict an appropriate permission schema to apply in response to one or more compromised state of the network 105. This further training may be based on data related to pre-set rules and/or on actively monitoring the access rules within various nodes of the network 105. By analyzing the relationships between node states and corresponding changes to access rules over time, the machine-learning model 127b learns to predict effective permission modifications to mitigate the impact of a data incident. This process may incorporate a dynamic learning approach, where the machine-learning model 127b is configured to adjust its understanding based on real-time changes in network behavior and/or states and associated access patterns across time, thereby enhancing its capability to recommend access control adjustments based on an identified state of the network 105.

Additionally, the training of the machine-learning model may be further based on historical and ongoing modifications to one or more access rules in relation to changes in the states of one or more nodes 130. Incorporating these additional data points may enable the model to identify patterns and correlations that may not be immediately apparent, allowing for an approach to the application of access permissions in the event of a data incident which is based on additional data associated with the network 105. The machine-learning model 127b may be further refined through continuous updates to its training dataset, incorporating new instances of data incidents and the access control measures implemented in response. This iterative learning process is configured to update the model's recommendations for permission schemas, such that they are current and contextually relevant based on the latest historical data associated with the network 105.

Moreover, based on an updated training to the machine-learning model 127b, the model may output one or more response rules, which may be incorporated into response rules 127a, alongside pre-defined rules, which may be established by network administrators or security policies. These response rules 127a, which may be activated when an impacted node and potentially other nodes are identified, are configured to outline the specific actions to be taken by the knowledge graph platform 120, including the application of the recommended permission schema. The integration of machine-learned recommendations with pre-defined rules creates a framework for responding to data incidents, balancing automated, data-driven decision-making with established security protocols.

In some embodiments, the knowledge graph platform 120 is configured to autonomously respond to one or more data incidents by adjusting permissions without the need for subsequent user interaction following the identification of a data incident. Leveraging machine-learning model 127b, the knowledge graph platform 120 may be configured to immediately implement predetermined or dynamically generated response rules, such as response rules 127a. Upon detecting a data incident, the knowledge graph platform 120 may be configured to assess the compromised state of the network 105 and identify the one or more impacted nodes 130. In some embodiments, the knowledge graph platform 120 is configured to output one or more predictions and automatically apply the most appropriate modifications to access permissions. This process may be informed by using network-relevant data as inputs to the machine-learning model 127b, including, but not limited to, the severity of the incident, the roles of affected users, the criticality and configuration of the impacted nodes, and the like, such that the network remains secure while maintaining operational integrity. Through this autonomous response mechanism, the platform may significantly reduce the window of vulnerability, mitigating potential damage and reinforcing the network 105 against future security threats.

Following the example provided above, in response to the accidental propagation of a Social Security number through the system, the knowledge graph platform 120 may temporarily suspend the user accounts that interacted with this data or adjust their access rights, thereby preventing further unauthorized access and securing the network against additional data leakage. Moreover, the access permissions may be modified for the users who currently have access to the compromised nodes, thereby limiting the number of users who may access the PII. At step 250, the method may include causing, by the one or more processors, a generation of a notification regarding the data leak and the modifications of access permissions to one or more users associated with the network. This notification process is configured to inform one or more users 115 associated with the environment 100 about the occurrence of a data incident and provide one or more details related to the data incident, such as details related to the specific adjustments made to access permissions at one or more nodes 130 in response to the identified security breach. The notification mechanism may provide transparency to relevant stakeholders and information about security incidents and the measures taken to mitigate their impact.

The generation of the notification may be automated to be performed by the knowledge graph platform 120, and in some embodiments, the generation may be triggered by the identification of a data leak and the implementation of changes to one or more access permissions by the processors. The content of the notification may include information about the incident, including the nature of the data incident, the nodes or areas of the network that were compromised, a summary of the access permission modifications that have been enacted, or other information relevant to convey information to a user related to the data incident. This communication may also include recommendations or required actions for the users, such as changing passwords or verifying account activity, to further secure their data and interactions with the network.

Furthermore, the method for delivering the notification is configured for prompt and secure communication with the affected users. Various channels may be employed for this purpose, including email, SMS, in-app notifications, or a dedicated portal within the user interface module 128 of the knowledge graph platform 120. The choice of communication channel may be based on one or more factors, such as the urgency of the message, the preferences of the users, and the security protocols governing the transmission of sensitive information.

In some embodiments, the notification generated in response to a data leak may include a depiction of a network diagram on a graphical user interface, which may be configured to visually represent the network's architecture and highlights the specific nodes affected by the incident. Alongside or within this diagram, information is provided next to one or more nodes within the diagram to indicate one or more relevant information, such as whether a node was the origin of the data leak, if it was impacted by the leak, what specific permission modifications were made in response to the incident, what additional remedial actions were undertaken, and the like. This visual representation facilitates a clear and immediate understanding of the scope and impact of the data breach, allowing users to easily comprehend which parts of the network were compromised and how access permissions have been adjusted to enhance security.

Following the above example, the notification may include the type of PII (a social security number), the identified node, the additional compromised nodes, and the various remedial actions undertaken.

In some embodiments, the method may include initiating remedial actions by the one or more processors, specifically focusing on the automatic rollback of the one or more compromised nodes 130 to a prior state that was unaffected by the data leak. This remedial action may involve one or more of the structures within node 130, such as the database module 132, software module 134, log module 136, and access management module 138. The rollback process is configured to revert one or more of these components to their secure, pre-compromise configurations, effectively erasing the alterations or intrusions introduced by the data leak.

In some embodiments, for the database module 132, the rollback action may restore previous versions of databases to a prior state that does not include or contain sensitive data. Similarly, for the software module 134, the procedure may replace current software versions with those known to be secure, or versions that do not produce any internal data leaks of sensitive data, thereby eliminating any malicious code or vulnerabilities that were present during the incident. The log module 136 may also be reverted to a state before the compromise, ensuring that any exposure of sensitive data within the logs during data incidents are corrected, thus maintaining the integrity of the system logs. Lastly, the access management module 138 may have its settings and permissions restored or otherwise modified to configurations that predate the breach.

In some embodiments, the knowledge graph platform 120 is configured to adjust scheduled data tasks at one or more nodes 130 or components within the environment 100 as a response to a data incident, which may result in minimal downtime for users 115 of the environment 100 during a response to a data incident. This adaptive response mechanism is configured to leverage the knowledge graph platform 120 comprehensive understanding of the network's architecture and its operational dynamics, facilitating a rapid and strategic adjustment of data processing and management activities across the network 105. The adjustment of scheduled tasks may involve postponing non-critical data operations, reallocating resources to prioritize the restoration of affected services, introducing temporary workflows that bypass compromised nodes while remedial actions are being executed, or the like.

In some embodiments, this dynamic scheduling is enabled by the insights generated by the machine-learning model 127b, which can predict the impact of data incidents on the network's performance and data flow and identify optimal strategies for maintaining service continuity. By analyzing patterns of data flow, user activity, and system utilization, the machine-learning model 127b is configured to formulate a response that minimizes disruptions to critical operations and ensures that users experience lessened interruptions during and after a data incident.

Furthermore, the knowledge graph platform 120 may be configured to automatically implement these adjustments across the environment 100, coordinating with various nodes 130 and network components to apply changes in real time. This may involve communicating with database modules 132 to adjust data storage and retrieval tasks, software modules 134 to modify application execution schedules, and access management modules 138 to ensure that security protocols remain effective even as task schedules are altered. By adopting this proactive and intelligent approach to managing scheduled data tasks in response to data incidents, the knowledge graph platform 120 may enhance the resilience of the environment 100.

In some embodiments, the response from the knowledge graph platform 120 may be delayed or paused at one or more points during the response, where during the delay or pause the knowledge graph platform 120 is awaiting input from a user. In such embodiments, the knowledge graph platform 120, upon detecting a data incident, is configured to provide a notification of the data incident, along with details related to the incident such as the impacted nodes 130, to one or more users 115 of the system. The user 115 may then confirm or verify the data incident, and provide one or more input to the knowledge graph platform 120 through user interface module 128 indicating that the data incident is a valid data incident. Upon verification, the remedial actions undertaken by the knowledge graph platform 120 may be automatic, may be presented to the user for further verification of the generated remedial actions, or may take the form of explicit remedial actions indicated by the user as inputs to the knowledge graph platform 120, which the knowledge graph platform 120 then implements within environment 100.

In some embodiments, a proxy module may be utilized as part of environment 100. The proxy module may be configured to operate as an intermediary layer for data incident management within environment 100. The proxy module may be a part of the knowledge graph platform 120, or may be a separate entity within environment 100. The proxy module, in terms of data flow, may be positioned between data sources, such as nodes 130, and incident management systems, such as knowledge graph module 126 or any other incident management system. When a potential data incident is identified, sensitive information may be filtered from the data incident evidence, sanitizing the data before it is passed to subsequent systems in the data incident management flow. In this way, the proxy module is configured to further stop the proliferation of PII during the transfer of information relevant to determine if one or more method steps are to be performed.

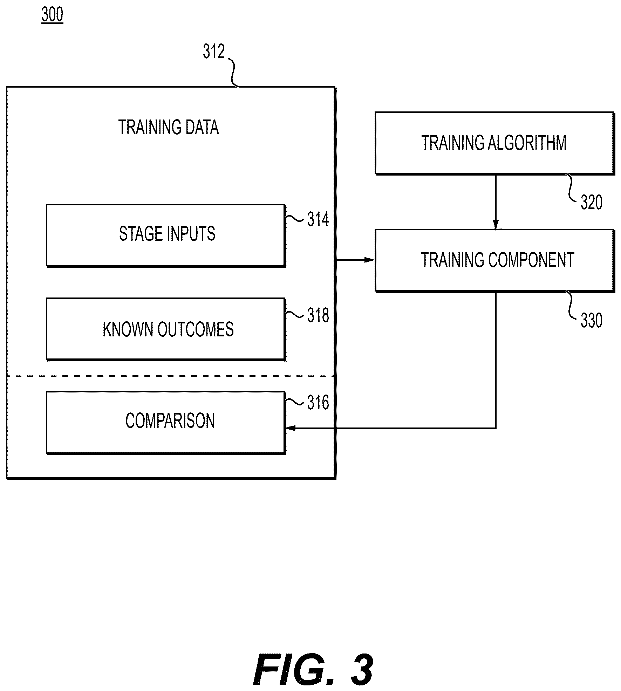

One or more implementations disclosed herein include and/or are implemented using a machine-learning model 127b. For example, one or more of the modules of the knowledge graph platform 120 are implemented using a machine-learning model 127b and/or are used to train the machine-learning model. FIG. 3 shows an example machine-learning training flow chart, according to some embodiments of the disclosure. Referring to Fig. 3, a given machine-learning model is trained using the training flow chart 300. The training data 312 includes one or more of stage inputs 314 and the known outcomes 318 related to the machine-learning model to be trained. The stage inputs 314 are from any applicable source including text, visual representations, data, values, comparisons, and stage outputs, e.g., one or more outputs from one or more steps from FIG. 2. The known outcomes 318 are included for the machine-learning models generated based on supervised or semi-supervised training, or can be based on known labels, such as topic labels. An unsupervised machine-learning model is not trained using the known outcomes 318. The known outcomes 318 includes known or desired outputs for future inputs similar to or in the same category as the stage inputs 314 that do not have corresponding known outputs.

The training data 312 and a training algorithm 320, e.g., one or more of the modules implemented using the machine-learning model and/or are used to train the machine-learning model, is provided to a training component 330 that applies the training data 312 to the training algorithm 320 to generate the machine-learning model. According to an implementation, the training component 330 is provided with comparison results 316 that compare a previous output of the corresponding machine-learning model to apply the previous result to re-train the machine-learning model. The comparison results 316 are used by the training component 330 to update the corresponding machine-learning model. The training algorithm 320 utilizes machine-learning networks and/or models including, but not limited to a deep learning network such as Deep Neural Networks (DNN), Convolutional Neural Networks (CNN), Fully Convolutional Networks (FCN) and Recurrent Neural Networks (RCN), probabilistic models such as Bayesian Networks and Graphical Models, classifiers such as K-Nearest Neighbors, and/or discriminative models such as Decision Forests and maximum margin methods, the model specifically discussed herein, or the like.

The machine-learning model used herein is trained and/or used by adjusting one or more weights and/or one or more layers of the machine-learning model. For example, during training, a given weight is adjusted (e.g., increased, decreased, removed) based on training data or input data. Similarly, a layer is updated, added, or removed based on training data/and or input data. The resulting outputs are adjusted based on the adjusted weights and/or layers.

In general, any process or operation discussed in this disclosure is understood to be computer-implementable, such as the process illustrated in FIG. 2 are performed by one or more processors of a computer system as described herein. A process or process step performed by one or more processors is also referred to as an operation. The one or more processors are configured to perform such processes by having access to instructions (e.g., software or computer-readable code) that, when executed by one or more processors, cause one or more processors to perform the processes. The instructions are stored in a memory of the computer system. A processor is a central processing unit (CPU), a graphics processing unit (GPU), or any suitable type of processing unit.

A computer system, such as a system or device implementing a process or operation in the examples above, includes one or more computing devices. One or more processors of a computer system are included in a single computing device or distributed among a plurality of computing devices. One or more processors of a computer system are connected to a data storage device. A memory of the computer system includes the respective memory of each computing device of the plurality of computing devices.

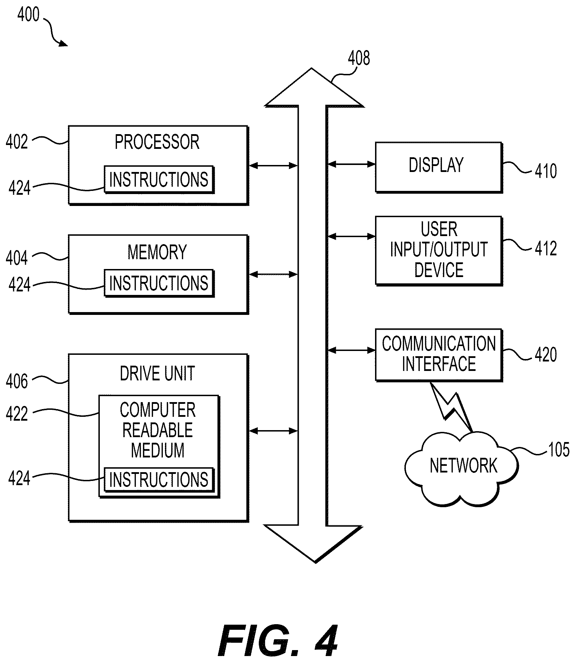

FIG. 4 illustrates an implementation of a computer system that executes techniques presented herein. The computer system 400 includes a set of instructions that are executed to cause the computer system 400 to perform any one or more of the methods or computer based functions disclosed herein. The computer system 400 operates as a standalone device or is connected, e.g., using a network, to other computer systems or peripheral devices.

Unless specifically stated otherwise, as apparent from the following discussions, it is appreciated that throughout the specification, discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" refers to any device or portion of a device that processes electronic data, e.g., from registers and/or memory to transform that electronic data into other electronic data that, e.g., is stored in registers and/or memory. A "computer," a "computing machine," a "computing platform," a "computing device," or a "server" includes one or more processors.

In a networked deployment, the computer system 400 operates in the capacity of a server or as a client user computer in a server-client user environment, or as a peer computer system in a peer-to-peer (or distributed) environment. The computer system 400 is also implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the computer system 400 is implemented using electronic devices that provide voice, video, or data communication. Further, while the computer system 400 is illustrated as a single system, the term "system" shall also be taken to include any collection of systems or sub-systems that individually or jointly execute a set, or multiple sets, of instructions to perform one or more computer functions.

As illustrated in FIG. 4, the computer system 400 includes a processor 402, e.g., a central processing unit (CPU), a graphics processing unit (GPU), or both. The processor 402 is a component in a variety of systems. For example, the processor 402 is part of a standard personal computer or a workstation. The processor 402 is one or more processors, digital signal processors, application specific integrated circuits, field programmable gate arrays, servers, networks, digital circuits, analog circuits, combinations thereof, or other now known or later developed devices for analyzing and processing data. The processor 402 implements a software program, such as code generated manually (i.e., programmed).

The computer system 400 includes a memory 404 that communicates via bus 408. The memory 404 is a main memory, a static memory, or a dynamic memory. The memory 404 includes, but is not limited to computer-readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 404 includes a cache or random-access memory for the processor 402. In alternative implementations, the memory 404 is separate from the processor 402, such as a cache memory of a processor, the system memory, or other memory. The memory 404 is an external storage device or database for storing data. Examples include a hard drive, compact disc ("CD"), digital video disc ("DVD"), memory card, memory stick, floppy disc, universal serial bus ("USB") memory device, or any other device operative to store data. The memory 404 is operable to store instructions executable by the processor 402. The functions, acts, or tasks illustrated in the figures or described herein are performed by the processor 402 executing the instructions stored in the memory 404. The functions, acts, or tasks are independent of the particular type of instruction set, storage media, processor, or processing strategy and are performed by software, hardware, integrated circuits, firmware, micro-code, and the like, operating alone or in combination. Likewise, processing strategies include multiprocessing, multitasking, parallel processing, and the like.

As shown, the computer system 400 further includes a display 410, such as a liquid crystal display (LCD), an organic light emitting diode (OLED), a flat panel display, a solid-state display, a cathode ray tube (CRT), a projector, a printer or other now known or later developed display device for outputting determined information. The display 410 acts as an interface for the user to see the functioning of the processor 402, or specifically as an interface with the software stored in the memory 404 or in the drive unit 406.

Additionally or alternatively, the computer system 400 includes an input/output device 412 configured to allow a user to interact with any of the components of the computer system 400. The input/output device 412 is a number pad, a keyboard, a cursor control device, such as a mouse, a joystick, touch screen display, remote control, or any other device operative to interact with the computer system 400.

The computer system 400 also includes the drive unit 406 implemented as a disk or optical drive. The drive unit 406 includes a computer-readable medium 422 in which one or more sets of instructions 424, e.g. software, is embedded. Further, the sets of instructions 424 embodies one or more of the methods or logic as described herein. The sets of instructions 424 reside completely or partially within the memory 404 and/or within the processor 402 during execution by the computer system 400. The memory 404 and the processor 402 also include computer-readable media as discussed above.

In some systems, computer-readable medium 422 includes the set of instructions 424 or receives and executes the set of instructions 424 responsive to a propagated signal so that a device connected to network 105 communicates voice, video, audio, images, or any other data over the network 105. Further, the sets of instructions 424 are transmitted or received over the network 105 via the communication port or interface 420, and/or using the bus 408. The communication port or interface 420 is a part of the processor 402 or is a separate component. The communication port or interface 420 is created in software or is a physical connection in hardware. The communication port or interface 420 is configured to connect with the network 105, external media, the display 410, or any other components in the computer system 400, or combinations thereof. The connection with the network 105 is a physical connection, such as a wired Ethernet connection, or is established wirelessly as discussed below. Likewise, the additional connections with other components of the computer system 400 are physical connections or are established wirelessly. The network 105 alternatively be directly connected to the bus 408.

While the computer-readable medium 422 is shown to be a single medium, the term "computer-readable medium" includes a single medium or multiple media, such as a centralized or distributed database, and/or associated caches and servers that store one or more sets of instructions. The term "computer-readable medium" also includes any medium that is capable of storing, encoding, or carrying a set of instructions for execution by a processor or that causes a computer system to perform any one or more of the methods or operations disclosed herein. The computer-readable medium 422 is non-transitory, and may be tangible.

The computer-readable medium 422 includes a solid-state memory such as a memory card or other package that houses one or more non-volatile read-only memories. The computer-readable medium 422 is a random-access memory or other volatile re-writable memory. Additionally or alternatively, the computer-readable medium 422 includes a magneto-optical or optical medium, such as a disk or tapes or other storage device to capture carrier wave signals such as a signal communicated over a transmission medium. A digital file attachment to an e-mail or other self-contained information archive or set of archives is considered a distribution medium that is a tangible storage medium. Accordingly, the disclosure is considered to include any one or more of a computer-readable medium or a distribution medium and other equivalents and successor media, in which data or instructions are stored.

In an alternative implementation, dedicated hardware implementations, such as application specific integrated circuits, programmable logic arrays, and other hardware devices, is constructed to implement one or more of the methods described herein. Applications that include the apparatus and systems of various implementations broadly include a variety of electronic and computer systems. One or more implementations described herein implement functions using two or more specific interconnected hardware modules or devices with related control and data signals that are communicated between and through the modules, or as portions of an application-specific integrated circuit. Accordingly, the present system encompasses software, firmware, and hardware implementations.

Computer system 400 is connected to the network 105. The network 105 defines one or more networks including wired or wireless networks. The wireless network is a cellular telephone network, an 802.10, 802.16, 802.20, or WiMAX network. Further, such networks include a public network, such as the Internet, a private network, such as an intranet, or combinations thereof, and utilizes a variety of networking protocols now available or later developed including, but not limited to TCP/IP based networking protocols. The network 105 includes wide area networks (WAN), such as the Internet, local area networks (LAN), campus area networks, metropolitan area networks, a direct connection such as through a Universal Serial Bus (USB) port, or any other networks that allows for data communication. The network 105 is configured to couple one computing device to another computing device to enable communication of data between the devices. The network 105 is generally enabled to employ any form of machine-readable media for communicating information from one device to another. The network 105 includes communication methods by which information travels between computing devices. The network 105 is divided into sub-networks. The sub-networks allow access to all of the other components connected thereto or the sub-networks restrict access between the components. The network 105 is regarded as a public or private network connection and includes, for example, a virtual private network or an encryption or other security mechanism employed over the public Internet, or the like.

In accordance with various implementations of the present disclosure, the methods described herein are implemented by software programs executable by a computer system. Further, in an example, non-limited implementation, implementations can include distributed processing, component/object distributed processing, and parallel processing. Alternatively, virtual computer system processing can be constructed to implement one or more of the methods or functionality as described herein.

Although the present specification describes components and functions that are implemented in particular implementations with reference to particular standards and protocols, the disclosure is not limited to such standards and protocols. For example, standards for Internet and other packet switched network transmission (e.g., TCP/IP, UDP/IP, HTML, and HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the steps of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure is implemented using any appropriate techniques for implementing the functionality described herein. The disclosure is not limited to any particular programming language or operating system.

It should be appreciated that in the above description of example embodiments of the disclosure, various features of the disclosure are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed disclosure requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this disclosure.

Furthermore, while some embodiments described herein include some but not other features included in other embodiments, combinations of features of different embodiments are meant to be within the scope of the disclosure, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the instructions for carrying out such a method or element of a method forms a means for carrying out the method or element of a method. Furthermore, an element described herein of an apparatus embodiment is an example of a means for carrying out the function performed by the element for the purpose of carrying out the disclosure.

In the description provided herein, numerous specific details are set forth. However, it is understood that embodiments of the disclosure are practiced without these specific details. In other instances, well-known methods, structures and techniques have not been shown in detail in order not to obscure an understanding of this description.

Thus, while there has been described what are believed to be the preferred embodiments of the disclosure, those skilled in the art will recognize that other and further modifications are made thereto without departing from the spirit of the disclosure, and it is intended to claim all such changes and modifications as falling within the scope of the disclosure. For example, any formulas given above are merely representative of procedures that may be used. Functionality may be added or deleted from the block diagrams and operations may be interchanged among functional blocks. Steps may be added or deleted to methods described within the scope of the present disclosure.

The above disclosed subject matter is to be considered illustrative, and not restrictive, and the appended claims are intended to cover all such modifications, enhancements, and other implementations, which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description. While various implementations of the disclosure have been described, it will be apparent to those of ordinary skill in the art that many more implementations and implementations are possible within the scope of the disclosure. Accordingly, the disclosure is not to be restricted except in light of the attached claims and their equivalents.

Various examples are set out in the following numbered paragraphs (NP):
NP 1. A computer-implemented method for responsive access control modification in an enterprise network, the method comprising:
   receiving, by one or more processors, one or more indicators of a data leak occurring at one or more nodes of a network;
   causing, by the one or more processors and via a machine-learning model, an identification of one or more compromised nodes within the network based on the one or more indicators of a data leak, wherein the machine-learning model has been trained on an architecture, layout, or topology of the network and on one or more network data flow;
   receiving from the machine-learning model, by the one or more processors, the identification of the one or more compromised nodes;
   modifying, by the one or more processors, access permissions at the one or more identified compromised nodes based on a user permission schema or predetermined access rules, in response to the data leak; and
   causing, by the one or more processors, a generation of a notification regarding the data leak and the modifications of access permissions to one or more users associated with the network.
NP 2. The method of NP 1, wherein the machine-learning model has further been trained on historical data flow throughout the network and one or more images of the architecture, layout, or topology of the network to identify associations between data at a first node and data at one or more second nodes.
NP 3. The method of NP 1, wherein modifying access permissions includes restricting access to the identified one or more compromised nodes for one or more users or user groups.
NP 4. The method of NP 1, further comprising analyzing, by the machine-learning model, the user permission schema to determine one or more modification for the access permissions.
NP 5. The method of NP 1, wherein the notification includes details about the identified one or more compromised nodes, a parameter of the data leak, and one or more modifications made to access permissions.
NP 6. The method of NP 1, further comprising rolling back one or more impacted nodes to a previous state that is unaffected by the data leak.
NP 7. The method of NP 6, wherein the rolling back includes reverting to one or more prior versions of logs or applications at the one or more impacted nodes.
NP 8. The method of NP 1, further comprising presenting a visual representation of the network, indicating the compromised nodes, the modifications to access permissions, and any rollbacks performed.
NP 9. The method of NP 1, wherein the machine-learning model predicts one or more additional nodes potentially impacted by the data leak, and the one or more processors generates one or more suggested preventive modifications to access permissions at the one or more additional nodes.
NP 10. A computer implemented method for automatic remediation of network nodes in an enterprise network in response to a data leak, the method comprising:
   receiving, by one or more processors, one or more indicators of a data leak occurring at one or more nodes of the network;
   causing, by the one or more processors and via a machine-learning model, an identification of one or more compromised nodes within the network based on the one or more indicators of a data leak, wherein the machine-learning model has been trained on an architecture, layout, or topology of the network and on network data flow;
   receiving from the machine-learning model, by the one or more processors, the identification of one or more compromised nodes;
   initiating, by the one or more processors, a remedial action, the remedial action including an automatic rollback of the one or more compromised nodes to a previous state unaffected by the data leak; and
   causing, by the one or more processors, a generation of a notification regarding the data leak and the remedial actions undertaken, including details of the rollbacks performed, to one or more users associated with the network.
NP 11. The method of NP 10, wherein the machine-learning model has further been trained using historical data flow throughout the network and one or more images of the architecture, layout, or topology of the network.
NP 12. The method of NP 10, further comprising modifying access permissions at one or more identified compromised nodes in addition to the remedial action, based on a current user permission schema or pre-determined access rules.
NP 13. The method of NP 10, wherein the notification includes details about the one or more compromised nodes, one or more parameters of the data leak, and the one or more remedial action performed.
NP 14. The method of NP 10, wherein the remedial action is selectively applied to specific components or services of the one or more compromised nodes based on one or more parameters of the data leak.
NP 15. The method of NP 10, further comprising analyzing a user permission schema to determine potential vulnerabilities and to guide one or more remedial action.
NP 16. The method of NP 10, wherein the machine-learning model predicts additional nodes potentially impacted by the data leak and suggests preventive actions for the additional nodes.
NP 17. The method of NP 10, further comprising presenting a visual representation of the network, indicating the one or more compromised nodes and the remedial actions undertaken.
NP 18. The method of NP 10, wherein the remedial action includes restoring data from backups that predate the data leak.
NP 19. A method for managing network security in an enterprise network, implemented by one or more processors, comprising:
   detecting, by the one or more processors, a data leak at one or more nodes of the network;
   identifying, by the one or more processors using a machine-learning model, one or more compromised nodes affected by the data leak, wherein the model is trained on a structure of the network and one or more data flow of the network;
   modifying, by the one or more processors, access permissions at the one or more compromised nodes based on an output of the machine-learning model, current user permissions, or predefined rules;
   performing, by the one or more processors, a remedial action to the one or more compromised nodes; and
   generating, by the one or more processors, a notification about the data leak, one or more modifications to access permissions, and the remedial actions, for one or more network users.
NP 20. The method of NP 19, wherein the remedial action includes rolling back the one or more compromised nodes to a previous state unaffected by the data leak, and wherein the modification of access permissions includes temporarily restricting access to sensitive data or services at the compromised nodes until the remedial action is completed.

## Claims

1. A computer-implemented method for responsive access control modification in an enterprise network, the method comprising:
receiving, by one or more processors, one or more indicators of a data leak occurring at one or more nodes of a network;
causing, by the one or more processors and via a machine-learning model, an identification of one or more compromised nodes within the network based on the one or more indicators of a data leak, wherein the machine-learning model has been trained on an architecture, layout, or topology of the network and on one or more network data flow;
receiving from the machine-learning model, by the one or more processors, the identification of the one or more compromised nodes;
modifying, by the one or more processors, access permissions at the one or more identified compromised nodes based on a user permission schema or predetermined access rules, in response to the data leak; and
causing, by the one or more processors, a generation of a notification regarding the data leak and the modifications of access permissions to one or more users associated with the network.

2. The method of claim 1, wherein the machine-learning model has further been trained on historical data flow throughout the network and one or more images of the architecture, layout, or topology of the network to identify associations between data at a first node and data at one or more second nodes.

3. The method of claims 1 or 2, wherein modifying access permissions includes restricting access to the identified one or more compromised nodes for one or more users or user groups.

4. The method of any of the preceding claims, further comprising analyzing, by the machine-learning model, the user permission schema to determine one or more modification for the access permissions.

5. The method of any of the preceding claims, wherein the notification includes details about the identified one or more compromised nodes, a parameter of the data leak, and one or more modifications made to access permissions.

6. The method of any of the preceding claims, further comprising rolling back one or more impacted nodes to a previous state that is unaffected by the data leak;
wherein, optionally:
the rolling back includes reverting to one or more prior versions of logs or applications at the one or more impacted nodes.

7. The method of any of the preceding claims, further comprising presenting a visual representation of the network, indicating the compromised nodes, the modifications to access permissions, and any rollbacks performed.

8. The method of any of the preceding claims, wherein the machine-learning model predicts one or more additional nodes potentially impacted by the data leak, and the one or more processors generates one or more suggested preventive modifications to access permissions at the one or more additional nodes.

9. A computer-readable storage medium, the computer-readable storage medium including instructions for automatic remediation of network nodes in an enterprise network in response to a data leak that when executed by one or more processors, cause the one or more processors to carry out the steps of:
receiving, by the one or more processors, one or more indicators of a data leak occurring at one or more nodes of the network;
causing, by the one or more processors and via a machine-learning model, an identification of one or more compromised nodes within the network based on the one or more indicators of a data leak, wherein the machine-learning model has been trained on an architecture, layout, or topology of the network and on network data flow;
receiving from the machine-learning model, by the one or more processors, the identification of one or more compromised nodes;
initiating, by the one or more processors, a remedial action, the remedial action including an automatic rollback of the one or more compromised nodes to a previous state unaffected by the data leak; and
causing, by the one or more processors, a generation of a notification regarding the data leak and the remedial actions undertaken, including details of the rollbacks performed, to one or more users associated with the network.

10. The computer-readable storage medium of claim 9, wherein:
(a) the machine-learning model has further been trained using historical data flow throughout the network and one or more images of the architecture, layout, or topology of the network; or
(b) the machine-learning model predicts additional nodes potentially impacted by the data leak and suggests preventive actions for the additional nodes.

11. The computer-readable storage medium of claims 9 or 10, further comprising:
(a) modifying access permissions at one or more identified compromised nodes in addition to the remedial action, based on a current user permission schema or pre-determined access rules;
(b) analyzing a user permission schema to determine potential vulnerabilities and to guide one or more remedial action; or
(c) presenting a visual representation of the network, indicating the one or more compromised nodes and the remedial actions undertaken.

12. The computer-readable storage medium of any of claims 9 to **11,** wherein the notification includes details about the one or more compromised nodes, one or more parameters of the data leak, and the one or more remedial action performed.

13. The computer-readable storage medium of any of claims 9 to 12, wherein:
(a) the remedial action is selectively applied to specific components or services of the one or more compromised nodes based on one or more parameters of the data leak.
(b) the remedial action includes restoring data from backups that predate the data leak.

14. A system for managing network security in an enterprise network, implemented by one or more processors, the system configured to:
detect, by the one or more processors, a data leak at one or more nodes of the network;
identify, by the one or more processors, using a machine-learning model, one or more compromised nodes affected by the data leak, wherein the model is trained on a structure of the network and one or more data flow of the network;
modify, by the one or more processors, access permissions at the one or more compromised nodes based on an output of the machine-learning model, current user permissions, or predefined rules;
perform, by the one or more processors, a remedial action to the one or more compromised nodes; and
generate, by the one or more processors, a notification about the data leak, one or more modifications to access permissions, and the remedial actions, for one or more network users.

15. The system of claim 14, wherein the remedial action includes rolling back the one or more compromised nodes to a previous state unaffected by the data leak, and wherein the modification of access permissions includes temporarily restricting access to sensitive data or services at the compromised nodes until the remedial action is completed.
